# EUROPÄISCHE PATENTSCHRIFT

(11) **EP 3 047 670 B1**
(45) Veröffentlichungstag und Bekanntmachung des Hinweises auf die Patenterteilung: **02.12.2020**
(21) Anmeldenummer: 14798676.4
(22) Anmeldetag: 18.09.2014
(51) Int. Cl.: H04W 4/80, H04L 29/06, H04W 12/06

(54) **AUTHENTIFIZIERUNGSSYSTEM FÜR EIN MOBILES DATENENDGERÄT**
AUTHENTICATION SYSTEM FOR A MOBILE DATA TERMINAL
SYSTÈME D'AUTHENTIFICATION POUR UN TERMINAL DE DONNÉES MOBILE

(30) Priorität: 20.09.2013 AT 505982013
(43) Veröffentlichungstag der Anmeldung: 27.07.2016
(73) Patentinhaber: ASMAG-Holding GmbH, 4645 Grünau im Almtal (AT)
(72) Erfinder: VIELHABER, Johann, A-4645 Grünau im Almtal (AT)
(74) Vertreter: Burger, Hannes
(86) Internationale Anmeldenummer: PCT/AT2014/050210
(87) Internationale Veröffentlichungsnummer: WO 2015/039157

(56) Entgegenhaltungen:
- EP-A1- 1 978 648
- US-A1- 2013 036 480
- US-A1- 2013 232 073
- Tony Bradley: "What You Need to Know About NFC Smartphone Payments", , 2 February 2011 (2011-02-02), XP055597427, Retrieved from the Internet: URL:https://www.pcworld.com/article/218475 /jumping_on_the_nfc_payments_bandwagon.htm l [retrieved on 2019-06-18]
- Nurulhuda Ismail ET AL: "Mobile to Server Face Recognition: A System Overview", , 1 January 2010 (2010-01-01), XP55597436, Retrieved from the Internet: URL:https://waset.org/publications/710/mob ile-to-server-face-recognition-a-system-ov erview [retrieved on 2019-06-18]

## Beschreibung

Die Erfindung betrifft ein Authentifizierungssystem umfassend ein Datenendgerät, ein Kommunikationsnetzwerk und einen Authentifizierungsdienst.

Im Zeitalter gesteigerter Mobilität bekommt eine mobile Authentifizierungsmöglichkeit immer größere Bedeutung. Zu Zeiten dokumentbasierter Authentifizierungsszenarien war eine Authentifizierung einer Person zumeist nur an wenigen, ausgewählten und örtlich festgelegten Institutionen möglich. Beispielsweise wurde dies von Behörden, Ämter und juristischen Institutionen wie Notare und Rechtsanwälte durchgeführt. Aufgrund der Verlagerung der Dienstanbietung von örtlich festgelegten Räumlichkeiten, hin zu einer mobilen Dienstanbietung über mobile Datenendgeräte, verlagert sich auch die Anforderung an die Authentifizierung in den mobilen Bereich.

Einerseits hat der Dienstbereitsteller ein verständliches Interesse daran, die Person, welche einen angebotenen Dienst in Anspruch nehmen möchte, zuverlässig und sicher zu authentifizieren. Andererseits besteht auch für die Person ein gesteigertes Interesse, sich selbst gegenüber einem Dienstanbieter oder beispielsweise einer Behörde sicher authentifizieren zu können.

Die US 2013/036480 A1 offenbart ein System zum gesicherten Datenaustausch und zur Durchführung von Transaktionen, in einer elektronischen Informationsumgebung. Das System umfasst eine Einheit, auf welcher persönliche Information abgelegt ist. Diese Einheit kann an einem Zentralsystem registriert werden, um nach Authentifizierung der Benutzeridentifikation, Daten zwischen der persönlichen Informationseinheit und dem Zentralsystem auszutauschen. Mittels dieser persönlichen Informationseinheit wird es einem Benutzer ermöglicht, gesicherte Transaktionen durchzuführen, wobei eine private und eine öffentliche Information verwendet wird. Die private Information wird dabei mit der persönlichen Informationseinheit verknüpft und im Zentralsystem hinterlegt. Die persönliche Informationseinheit umfasst einen Prozessor, welcher mit einem nicht flüchten Speicher verbunden ist. In diesem Speicher sind biometrische Daten hinterlegt, welche vom Benutzer während des Auslieferungsprozesses bekannt gegeben wurden. Diese biometrischen Daten werden dazu verwendet, mittels biometrischer Erfassungstechnologien die Identität eines Benutzers zu verifizieren.

Die EP 1 978 648 A1 offenbart eine Benutzeridentifizierung während eines Bezahlvorgangs, unter Verwendung eines vertrauenswürdigen Benutzer-Endgerätes, ohne dafür einen formalen Registrierungsprozess mit dem Verkäufer bzw. dem Bezahlnetzwerk durchführen zu müssen. Vom Benutzer wird dazu ein biometrischer Datensatz lokal am Benutzer-Endgerät hinterlegt, welcher für eine anschließende Benutzer-Authentifikation herangezogen wird. Bei einer Authentifikation unter Verwendung des Benutzer-Endgerätes, werden vom Benutzer-Endgerät lokal zwei biometrische Datensätze miteinander verglichen. Bei einer Benutzer-Authentifikation mittels eines zentralen Servercomputers wird vom Benutzer-Endgerät ein biometrischer Artefakt erstellt, und mit einem am Server erstellten digitalen Artefakt verglichen, um so eine Übereinstimmung zu prüfen. Zur Vorbereitung des Benutzer-Endgerätes wird vom Benutzer ein biometrischer Datensatz lokal an dem Benutzer-Endgerät hinterlegt, wobei die Gerätesoftware daraus ein eindeutiges, biometrisches digitales Artefakt erstellt. Mittels eines biometrischen Sensors wird am Benutzer-Endgerät ein biometrischer Datensatz des Benutzers erfasst und von der Gerätesoftware im Speichermedium des Benutzer-Endgeräts hinterlegt. Dadurch wird eine Zuordnung des Benutzers zum Benutzer-Endgerät realisiert.

Der Artikel von Tony Bradley mit Titel: "What you need to know about NFC smartphone payments" offenbart NFC Smartphone Zahlungen über einen Point of Sale.

Der Artikel von Nurulhuda Ismail ET AL mit Titel: "Mobile to Server Face Recognition: A System Overview" offenbart ein Systemüberblick über die Gesichtserkennung von Mobile Server.

Aus dem Stand der Technik ist dazu bekannt, mobile Computer dafür zu verwenden, beispielsweise Laptops. Mit derartigen Geräten ist zumeist eine ausreichende Verarbeitungskapazität vorhanden, um die teils recht aufwändigen Analyseverfahren zur Durchführung der Authentifikation ausführen zu können. Bei derartigen Systemen war zumeist eine Datenbank am Gerät hinterlegt, in der zugelassene Benutzer abgespeichert wurden. Zur Durchführung der Benutzer-Authentifikation wurde ein biometrisches Merkmal der Person erfasst, entsprechend aufbereitet und mit den hinterlegten Merkmalen verglichen. Bei einer gefundenen Übereinstimmung wurde ein Zugriff auf das Gerät bzw. die angeforderte Transaktion gewährt.

Ein Nachteil derartiger Systeme liegt vor allem darin, dass am Gerät biometrische Referenzdaten gespeichert sind und insbesondere ein mobiler Computer aufgrund seiner Größe und der teilweise recht langen Hochstartzeiten, für eine schnelle Authentifikation eher ungeeignet ist.

Im Zuge der technischen Weiterentwicklung kommt es mit den sogenannten Smartphones einerseits zu einer deutlichen Verkleinerung mobiler Datenendgeräte bei gleichzeitiger deutlieher Leistungssteigerung. Andererseits finden derartige Smartphones eine immer weitere Verbreitung. Beim bestimmungsgemäßen Einsatz eines Smartphones wird davon ausgegangen, dass ein derartiges Gerät eine ständige Datenverbindung mit einem Kommunikationsnetzwerk besitzt, insbesondere ist von einer permanenten Verbindung mit dem Internet auszugehen. Daher ist es immer weniger erforderlich, umfangreiche Benutzer-Referenzdaten auf dem mobilen Datenendgerät abzulegen. Diese Daten können auf einem zentralen und zumeist gut gesicherten Server hinterlegt werden. Das mobile Datenendgerät dient dann im Wesentlichen als Erfassungs- und Aufbereitungsvorrichtung, welche ein biometrisches Merkmal der zu authentifizierenden Person erfasst und dieses über das Kommunikationsnetzwerk an einen zentralen Dienst übermittelt.

Beispielsweise zeigt die Schrift WO 2013/134299 A1 ein zweistufiges System zur Abwicklung einer sicheren Zahlung. Dabei wird nach einer Zahlungsanforderung mittels eines Smartphones ein biometrisches Merkmal erfasst, dieses an ein Abrechnungssystem übermittelt, wo das erfasste, biometrische Merkmal analysiert wird. Bei Übereinstimmung wird die Zahlung freigegeben.

Ferner sind auch Systeme bekannt, welche ein externes Medium als eindeutiges Identifikationsmerkmal einer Person verwenden. Bevorzugt wird dafür eine sogenannte Smartcard eingesetzt, von der ausgegangen wird, dass sie nur der zugewiesene Benutzer besitzt bzw. dass nur diese Person Zugriff auf die Smartcard hat. Beispielsweise zeigen die Schriften US 2013/0237190 A1 und US 2013/239202 A1 Systeme, bei denen ein mobiles Datenendgerät mit einer Smartcard gekoppelt wird, um darüber eine Authentifizierung herzustellen.

Der Nachteil von mobilen Computersystemen liegt vor allem in ihrer Größe und der damit verbundenen Unflexibilität im Hinblick auf eine schnelle und einfache Authentifizierung einer Person. Smartphones haben diesbezüglich den Vorteil, dass sie deutlich kleiner und kompakter sind und damit auch eine bessere Verbreitung gegeben ist.

Nachteilig an beiden Systemen ist jedoch, dass sie aufgrund der bestimmungsgemäß vorhandenen Verarbeitungskapazität, zusätzlich auch für eine Vielzahl anderer Applikationen verwendet werden. Somit besteht stets ein erhebliches Risiko, dass aufgrund eines Manipulationsangriffs, der Authentifizierungsvorgang am Gerät kompromittiert werden kann. Ferner ist es von Nachteil, dass insbesondere Smartphones und Laptops gerne Gegenstand von Eigentumsdelikten werden, sodass in einem derartigen Fall eine Authentifikation der Person, beispielsweise im Zuge der Anzeige des Eigentumsdelikts, nicht mehr möglich ist.

Die Aufgabe der Erfindung liegt also darin, ein Authentifizierungssystem zu schaffen, welches ein Höchstmaß an Sicherheit hinsichtlich der zuverlässigen Authentifikation einer Person bietet und welches die Nachteile des Standes der Technik im Hinblick auf eine einfache Verfügbarkeit überwindet. Die Erfindung ist in den unabhängigen Ansprüchen definiert. Besondere Ausführungsformen werden in den abhängigen Ansprüchen dargelegt. Einige der nachstehend beschriebenen Ausführungsformen sind keine Ausführungsformen der Erfindung nach den Ansprüchen.

Die Aufgabe der Erfindung wird gelöst durch ein Authentifizierungs-System, umfassend ein Datenendgerät mit einer Datenendeinrichtung, ein Kommunikationsnetzwerk und einen Authentifizierungsdienst, wobei der Authentifizierungsdienst eine Datenbank umfasst, in welcher Benutzer-Referenzdaten hinterlegt sind. Die Datenendeinrichtung weist eine Bildaufnahme-Vorrichtung, ein Bildaufbereitungs-Modul und eine drahtlose Kommunikationsschnittstelle auf. Über das Kommunikationsnetzwerk besteht zwischen der Datenendeinrichtung und dem Authentifizierungsdienst eine erste Kommunikationsverbindung. Das Datenendgerät ist durch eine Uhr gebildet. Der Authentifizierungsdienst weist ein Gesichtsfindungs- und Gesichtserkennungs-Modul und ferner ein 2D/3D-Bild-Analysemodul auf. Das 2D/3D-Bild-Analysemodul ist dazu ausgebildet, in einem, von der Bildaufnahme-Vorrichtung erfassten und über die Kommunikationsverbindung übertragenen Abbild, ein 3D-Objekt, insbesondere eine reale Person, zu erkennen. Weiters ist die Kommunikationsschnittstelle als Fernbereichsschnittstelle und als Nahbereichsschnittstelle ausgebildet, wobei die Nahbereichsschnittstelle unidirektional ausgebildet ist. Es ist ein point of sale vorgesehen, an welchem point of sale von der Datenendeinrichtung eine Authentifizierungsanforderung auslösbar ist. Mittels der als Nahbereichsschnittstelle ausgebildeten Kommunikationsschnittstelle ist eine kurzreichweitige Datenverbindung mit einer entsprechenden Gegenstelle des point of sale herstellbar. Der Authentifizierungsdienst umfasst weiters eine Schnittstelle, wobei über das Kommunikationsnetzwerk zwischen dem point of sale und der Schnittstelle des Authentifizierungsdienstes eine weitere Kommunikationsverbindung besteht.

Der Vorteil dieser Ausführung liegt insbesondere darin, dass eine Uhr als Gegenstand des täglichen Gebrauchs zumeist stets mitgeführt wird, ohne dafür eine eigene Tragevorrichtung bzw. Platz in einer Tasche oder dergleichen zu benötigen. Somit steht das Datenendgerät stets zur Durchführung einer Authentifikation zur Verfügung.

Ferner weist der Authentifizierungsdienst ein Gesichtsfindungs- und Gesichtserkennungs-Modul auf. In einem erfassten Abbild gilt es das Gesicht zu finden, um dieses hernach einer weiteren Analyse zur Durchführung der Authentifikation zuführen zu können. Methoden zur Findung von Objekten bzw. zur Freistellung von Gesichtern sind aus dem Stand der Technik bekannt, beispielsweise aus der EP 1 119 822 B1 und der DE 101 26 375 A1 bekannt.

Weiters ist vorgesehen, dass der Authentifizierungsdienst ein 2D/3D-Bild-Analysemodul aufweist. Dabei wird analysiert, ob das Abbild von einem 2D-Foto, oder einem 3D-Objekt erfasst wurde. Somit kann ein Manipulationsversuch mit einem Foto der zu authentifizierenden Person verhindert werden. Ein derartiges System ist aus dem Stand der Technik, bspw. der EP 2 584 493 A2, bekannt.

Ferner ist vorgesehen, dass die Kommunikationsschnittstelle als Fernbereichsschnittstelle und als Nahbereichsschnittstelle ausgebildet ist. Als Fernbereichsschnittsstelle wird bevorzugt WLAN verwendet, da damit eine gute Konnektivität zu einer Vielzahl von Empfangsgegenstellen gewährleistet ist. Wie an sich bekannt ist, lässt sich mit WLAN eine Distanz von mehreren zehn Metern überbrücken. Als Nahbereichsschnittstelle können bspw. Bluetooth, Zig-Bee oder auch NFC verwendet werden. Die Reichweite derartiger Kommunikationssystem ist auf wenige Meter bzw. Zentimeter beschränkt. Somit kann sichergestellt werden, dass eine Konnektivität nur auf einen sehr abgegrenzten Bereich beschränkt ist. Dieser abgegrenzte Bereich kann vom Benutzer während der Authentifikation gut beobachtet werden, um einen Ausspähversuch erkennen zu können.

Es ist weiters die Nahbereichsschnittstelle der Kommunikationsschnittstelle unidirektional ausgebildet, wodurch sich eine Zwei-Wege-Authentifizierung erreichen lässt. Dabei wird eine Authentifizierungsanforderung von dem mobilen Datenendgerät initiiert, die Rückmeldung über eine positive/negative Authentifizierung durch den Authentifizierungsdienst erfolgt über einen anderen Weg. Beispielsweise könnte die Authentifizierungsanfrage am POS (point of sale) mit der POS-Kennung erfolgen, die Rückmeldung des Authentifizierungsdienstes ergeht direkt an den POS.

Dahingehend besteht eine Weiterbildung auch darin, dass die Uhr ausgebildet ist als Armbanduhr, oder Taschenuhr, oder Ansteckuhr. Ein Vorteil dieser Weiterbildung liegt auch darin, dass eine Uhr zumeist nicht als Datenendgerät gesehen wird, was hilfreich ist, wenn ein Authentifizierungsvorgang verschleiert werden soll.

Nach einer Weiterbildung ist auch vorgesehen, dass die Bildaufnahme-Vorrichtung durch einen flächigen Bildsensor gebildet ist. Beispielsweise kann dies ein allseits bekannter CCD-Bildsensor mit einer quadratischen, oder rechteckigen Sensorfläche sein. Zur Durchführung einer zuverlässigen Authentifikation sollte der Sensor eine Mindestauflösung von 640 Punkten auf der kürzesten Seite haben.

Von Vorteil ist ferner, wenn die Kommunikationsschnittstelle als Mobilfunkschnittstelle nach einem Internationalen Mobilfunkstandard ausgebildet ist. Damit kann das Datenendgerät eine direkte Verbindung zum Kommunikationsnetzwerk bzw. zum Authentifizierungsdienst herstellen, ohne auf eine Zwischenschaltung eines Fernbereichs-Kommunikationssystems angewiesen zu sein. Fernbereichs-Kommunikationssysteme können bei entsprechender Sicherung schwer, aber dennoch einfacher ausgespäht werden, als eine Mobilfunkverbindung. Im Hinblick auf die Sicherung der Kommunikationsverbindung ist diese Ausbildung daher von Vorteil.

Neben der Authentifizierung einer Person kann es von Vorteil sein, wenn mit dem gegenständlichen System auch ein Gerät der Person authentifiziert werden kann. Daher ist gemäß einer Weiterbildung vorgesehen, dass die Datenendeinrichtung eine Datenschnittstelle aufweist. Somit kann das Datenendgerät mit dem zu authentifizierenden Gerät verbunden werden und die Authentifikation durchgeführt werden. Nach erfolgreicher Authentifikation kann das Gerät mit den Berechtigungen der Person Aktionen ausführen.

Da es sich beim gegenständlichen Datenendgerät um eine Uhr handelt, wobei insbesondere bei der Ausführung als Armbanduhr zumeist einen guten Kontakt zur Hautoberfläche gegeben ist, ist nach einer Weiterbildung vorgesehen, dass die Datenendeinrichtung ferner eine Schnittstelle für ein Body-Area-Network (BAN) aufweist. In einem BAN können verschiedene Sensoren zur Überwachung der Vitalzeichen einer Person miteinander über das Nahfeld der Haut kommunizieren. Dies kann bspw. dahingehend verwendet werden, die Anordnung der Uhr an einer Person mit Vitalzeichen zu überwachen. Somit kann eine eindeutige Zuordnung des Datenendgeräts zu einer lebenden Person sichergestellt werden.

Eine weitere Ausführung zur Sicherstellung eine lebende Person und kein Abbild zu Authentifizieren besteht darin, dass der Authentifizierungsdienst ein Bewegungserkennungs-Modul aufweist. Insbesondere lässt sich mit einem Bewegungserkennungs-Modul prüfen, ob das erfasste Abbild zufällig vorgegebene Bewegungsmuster in einer erwarteten Art und Weise ausführt. So kann von der zu authentifizierenden Person gefordert werden, bestimmte Blickrichtungen einzunehmen. Beim Blickrichtungswechsel müssen sich Proportionen im Gesicht der Person in bestimmten Maßen ändern. Tun sie dies nicht, kann davon ausgegangen werden, dass vor die Bildaufnahme-Vorrichtung ein 2D-Foto der Person gehalten wird. Beispielsweise zeigt die EP 1 147 494 B1 ein derartiges Bewegungserkennungs-Modul.

Bei einer nicht unter den Schutzumfang fallenden Ausbildung kann auch vorgesehen sein, dass die Uhr in eine mobile Kommunikationsvorrichtung integriert ist, insbesondere in ein Smartphone.

Ferner ist auch vorgesehen, dass das Datenendgerät in einem eigenständigen Gehäuse angeordnet ist. Durch ein eigenständiges Gehäuse lassen sich alle Komponenten des Datenendgeräts, insbesondere die Datenendeinrichtung, kompakt und geschützt anordnen. Bevorzugt wird das Gehäuse als Uhrgehäuse ausgebildet sein, um so die sicherheitsrelevante Funktion des Datenendgeräts ggf. verschleiern zu können.

Um der zu authentifizierenden Person eine Rückmeldung über den Authentifizierungsprozess geben zu können, ist es von Vorteil, wenn die Datenendeinrichtung ein Ausgabemittel aufweist, welches am Datenendgerät angeordnet ist, bevorzugt in einer Vorderseite des Gehäuses. Das Ausgabemittel kann bspw. durch eine Anzeige gebildet sein, bevorzugt wird eine LCD- oder TFT-Anzeige gewählt. Des Weiteren von Vorteil ist es auch, wenn zusätzlich, oder alternativ eine Statusanzeige, bspw. in der Form einer Leuchtanzeige vorhanden ist. Zur korrekten Authentifizierung ist es erforderlich, dass sich die Person in einem bestimmten Abstandsabschnitt zum Datenendgerät befindet. Insbesondere muss die Bildaufnahme-Vorrichtung in der Lage sein, das relevante Merkmal einer Person vollständiges zu erfassen. Daher kann der Person mittels des Ausgabemittels eine Rückmeldung gegeben werden, wie der Aufnahmeabstand zu verändern ist, oder ob die Aufnahme bzw. die Authentifikation erfolgreich war.

Ein wesentliches Sicherheitsrisiko bei der Authentifikation einer Person mittels eines mobilen Datenendgeräts liegt darin, sichergehen zu können, dass das Datenendgerät tatsächlich einer Person zugeordnet werden kann, welche die Authentifikation durchführt. Daher ist es von Vorteil, wenn in einer Rückwand des Gehäuses eine biometrische Erfassungsvorrichtung angeordnet ist, welche mit der Datenendeinrichtung verbunden ist. Somit kann gewährleistet werden, dass bei der Durchführung der Authentifikation, das Datenendgerät auf einem Körperteil mit biometrischen Merkmalen angebracht ist. Von Vorteil ist insbesondere, wenn die biometrische Erfassungsvorrichtung zur Erfassung der Venenstruktur der Haut, welche ein eindeutiges biometrisches Merkmal darstellt, ausgebildet ist. Somit ist eine eindeutige Zuordnung des Datenendgeräts zu einer Person möglich. Eine solche biometrische Sicherungsvorrichtung ist bspw. aus der EP 2 240 882 B2 bekannt. Dabei sind am Datenendgerät biometrische Referenzmuster bspw. der Venenstruktur hinterlegt, die mit den erfassten übereinstimmen müssen.

Gemäß einer Weiterbildung weist das Gehäuse eine Haltevorrichtung auf, oder am Gehäuse ist eine Haltvorrichtung angeordnet, wobei die Haltevorrichtung zur Anordnung des Gehäuses an einer Person ausgebildet ist. Diese Weiterbildung hat den Vorteil, dass das mobile Datenendgerät wie eine Armbanduhr getragen werden kann.

Im Sinne einer zuverlässigen Zuordnung des mobilen Datenendgeräts zu einer Person ist gemäß einer Weiterbildung vorgesehen, dass die Haltevorrichtung ein Verschlusselement aufweist, welches Verschlusselement über eine Kontaktgabeleitung mit einem Sicherheitskreis-Modul der Datenendeinrichtung verbunden ist. Somit lässt sich eindeutig nachvollziehen, ob die Haltevorrichtung geschlossen ist und somit eine Zuordnung des mobilen Datenendgeräts zur Person gegeben ist. Es ist jedoch insbesondere möglich zu erkennen, wann das Verschlusselement geöffnet wurde und somit eine eindeutige Zuordnung nicht mehr gegeben ist. Dies ist insbesondere dahingehend von Bedeutung, dass es somit möglich ist, eine Authentifikation solange aufrecht zu erhalten, solange die Haltevorrichtung geschlossen ist - und somit einer Person zugeordnet ist. Sobald das Verschlusselement geöffnet wird, kann die Authentifikation aufgehoben werden.

Zum besseren Verständnis der Erfindung wird diese anhand der nachfolgenden Figuren näher erläutert.

Es zeigen jeweils in stark vereinfachter, schematischer Darstellung:
- Fig. 1: ein gegenständliches Datenendgerät;
- Fig. 2: das gegenständliche Authentifizierungs-System;
- Fig. 3: eine weitere mögliche Ausführung des gegenständlichen Authentifizierungs-Systems.

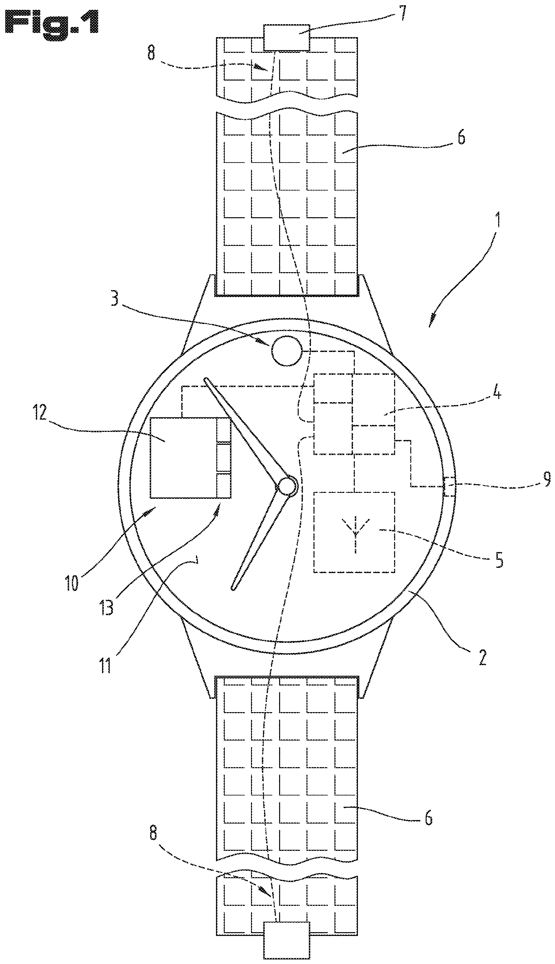

Fig. 1 zeigt ein Datenendgerät 1 des gegenständlichen Authentifizierungssystems. Das Datenendgerät 1 ist als eine Uhr ausgebildet, welche Uhr in einem eigenständigen Gehäuse 2 angeordnet ist. Das Datenendgerät 1 weist ferner eine Datenendeinrichtung auf, welche Datenendeinrichtung eine Bildaufnahme-Vorrichtung 3, ein Bildaufbereitungs-Modul 4 und eine drahtlose Kommunikationsschnittstelle 5 aufweist.

Zur Anordnung des Datenendgeräts 1 an einer Person, insbesondere an einem Körperteil einer Person, ist ferner vorgesehen, dass das Gehäuse 2 eine Haltevorrichtung 6 aufweist, oder dass am Gehäuse 2 eine Haltevorrichtung 6 angeordnet ist.

Bevorzugt wird die Haltevorrichtung 6 ein Verschlusselement 7 aufweisen, welches über eine Kontaktgabeleitung 8 mit einem Sicherheitskreismodul der Datenendeinrichtung verbunden ist.

Nach einer Weiterbildung kann vorgesehen sein, dass die Datenendeinrichtung eine Datenschnittstelle 9 aufweist, welche Datenschnittstelle 9 bevorzugt zur Verbindung des Datenendgeräts 1 mit einem zu authentifizierenden Gerät ausgebildet ist.

Nach einer Weiterbildung kann ferner vorgesehen sein, dass die Datenendeinrichtung ein Ausgabemittel 10 aufweist, welches bevorzugt in einer Vorderseite 11 des Gehäuses 2 angeordnet ist. Das Ausgabemittel kann beispielsweise eine Anzeige 12 aufweisen, welche das von der Bildaufnahme-Vorrichtung 3 erfasste Abbild wiedergibt. Somit kann dem Benutzer während der Durchführung der Authentifikation eine visuelle Kontrolle gegeben werden, ob das Datenendgerät 1 in korrekter Relation zum Körper der Person, insbesondere zum Gesicht, gehalten wird. Bei einer korrekten Positionierung kann beispielsweise durch einen Farbumschlag der Anzeige 12 die korrekte Positionierung angezeigt werden.

Es ist jedoch auch möglich, dass das Ausgabemittel 10 zusätzlich oder alternativ eine Leuchtanzeige 13 aufweist, mittels der dem Benutzer ebenfalls eine Rückmeldung über die korrekte Positionierung des Datenendgeräts 1 gegeben werden kann. Beispielsweise kann im Sinn eines Ampelsystems die korrekte Positionierung angezeigt werden.

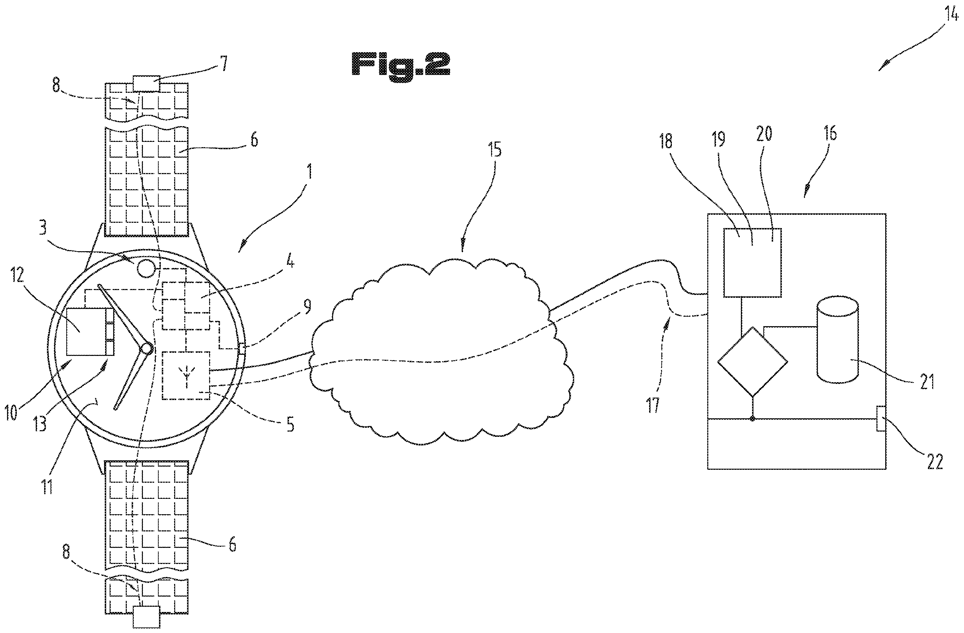

Fig. 2 zeigt eine mögliche Ausführung des gegenständlichen Authentifizierungs-Systems 14, umfassend ein mobiles Datenendgerät 1, ein Kommunikationsnetzwerk 15 und einen Authentifizierungsdienst 16. Über das Kommunikationsnetzwerk 15 wird zwischen der drahtlosen Kommunikationsschnittstelle 5 und dem Authentifizierungsdienst 16 eine Kommunikationsverbindung 17 hergestellt. Bevorzugt ist diese Kommunikationsverbindung 17 bidirektional ausgebildet, es ist jedoch auch eine unidirektionale Ausbildung, vom Datenendgerät 1 zum Authentifizierungsdienst 16 möglich. Der Authentifizierungsdienst 16 weist bevorzugt ein 2D/3D-Bild-Analysemodul 18, ein Gesichtsfindungs- und Gesichtserkennungs-Modul 19 sowie ein Bewegungserkennungs-Modul 20 auf. Ferner umfasst der Authentifizierungsdienst 16 eine Datenbank 21, in welcher Benutzerreferenzdaten hinterlegt sind.

Wird nun vom Datenendgerät 1 eine Authentifizierungsanforderung ausgelöst, wird von der Bildaufnahme-Vorrichtung 3 ein Bild, oder eine Folge von Bildern, der zu authentifizierenden Person aufgenommen, gegebenenfalls aufbereitet und über die Kommunikationsverbindung 17 an den Authentifizierungsdienst 16 übermittelt. Das Gesichtsfindungs- und Gesichtserkennungs-Modul 19, aus den übermittelten Aufnahmedaten ein Gesicht, bzw. die Position des Gesichts im Abbild für die weitere Verarbeitung zu ermitteln. Anschließend findet durch das 2D/3D-Bild-Analysemodul 18 eine Prüfung statt, ob es sich bei einem erfassten Abbild um ein Abbild einer realen Person, also eines 3D-Objekts, handelt oder ob ein Abbild eines 2D-Fotos erfasst wurde.

Da von der Bildaufnahme-Vorrichtung 3 neben einen oder mehreren Standbildern auch Bewegtbilder aufgenommen werden können, kann vom Bewegungserkennungs-Modul 20 ein Bewegungsablauf analysiert werden, der nur dann auftreten kann, wenn die Abbilder von einer realen Person erfasst wurden. Nach Durchführung einer oder mehrerer Bildanalysen wird das Analyseergebnis mit den in der Datenbank 21 hinterlegten Benutzerreferenzdaten verglichen und bei einer gefundenen Übereinstimmung, wird ein positives Authentifizierungssignal zurück an das Datenendgerät 1 gesendet, bzw. über eine Schnittstelle 22 an einen externen Dienstanbieter bereitgestellt.

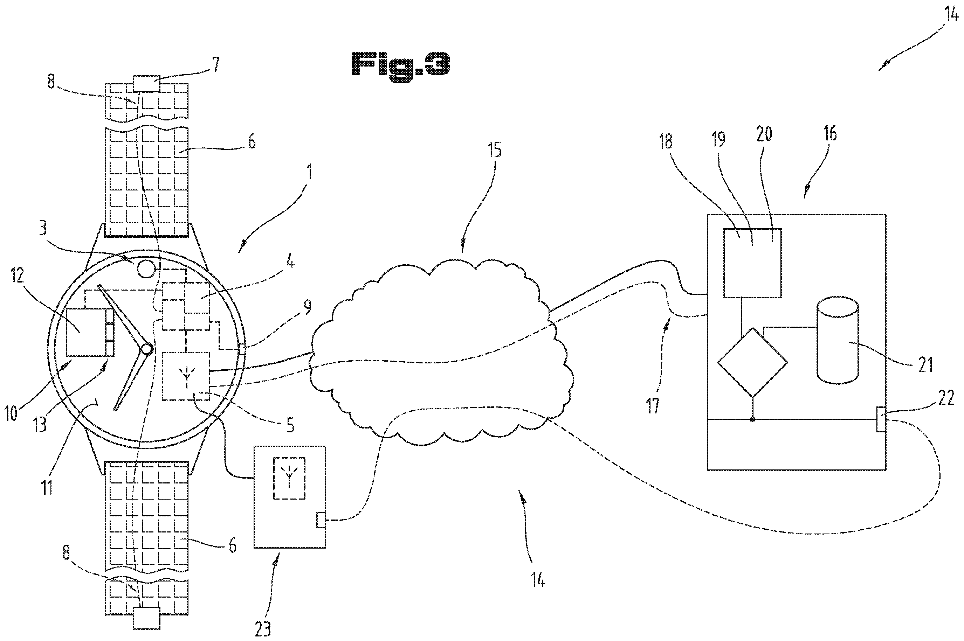

Fig. 3 zeigt eine weitere mögliche Ausführung des gegenständlichen Authentifizierungs-Systems 14. In Fig. 2 war eine Ausführung dargestellt, bei der ein externer Dienstanbieter über eine Schnittstelle 22 des Authentifizierungsdienstes 16 eine positive Authentifizierung erhalten konnte und hernach den angeforderten Dienst bereitstellen konnte.

Fig. 3 zeigt nun eine Möglichkeit bei der ein Benutzer am Ort einer Diensterbringung, am point of sale (POS) 23, eine Authentifizierungsanforderung auslösen kann. Beispielsweise kann dieser POS 23 eine Kassa, eine Zutrittskontrolle und/oder eine Identitätskontrolle bei einer Behörde sein. Bevorzugt wird dazu die Kommunikationsschnittstelle 5 zusätzlich als Nahbereichsschnittstelle ausgebildet sein und somit eine kurzreichweitige Datenverbindung mit einer entsprechenden Gegenstelle des point of sale (POS) 23 herstellen können. Das Authentifizierungsergebnis kann nun vom Authentifizierungsdienst 16 über die Kommunikationsverbindung 17 an das Datenendgerät 1 zurückübermittelt werden, um von diesem über die Kommunikationsschnittstelle 5 an den POS 23 übermittelt zu werden. Es ist jedoch auch möglich, dass die Nahbereichsschnittstelle unidirektional ausgebildet ist und somit beispielsweise lediglich eine eindeutige Kennung des POS 23 an den Authentifizierungsdienst 16 übermitteln kann. Das Authentifizierungsergebnis des Authentifizierungsdienstes 16 kann nun mittels der übermittelten Kennung des POS direkt an den POS übermittelt werden, beispielsweise über die Schnittstelle 22 des Authentifizierungsdienstes 16. Somit lässt sich eine Steigerung der Authentifizierungssicherheit erreichen, da das Ergebnis der Authentifikation nicht durch das Authentifikation auslösende Gerät bereitgestellt wird, sondern dass dieses über einen unabhängigen Weg zurück übermittelt wird.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Des Weiteren können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus des Authentifizierungs-Systems diese bzw. deren Bestandteile teilweise unmaßstäblich und/oder vergrößert und/oder verkleinert dargestellt wurden.

### Bezugszeichenaufstellung

- 1: Datenendgerät
- 2: Gehäuse
- 3: Bildaufnahme-Vorrichtung
- 4: Bildaufbereitungs-Modul
- 5: Kommunikationsschnittstelle
- 6: Haltevorrichtung
- 7: Verschlusselement
- 8: Kontaktgabeleitung
- 9: Datenschnittstelle
- 10: Ausgabemittel
- 11: Vorderseite
- 12: Anzeige
- 13: Leuchtanzeige
- 14: Authentifizierungs-System
- 15: Kommunikationsnetzwerk
- 16: Authentifizierungsdienst
- 17: Kommunikationsverbindung
- 18: 2D/3D-Bild-Analysemodul
- 19: Gesichtsfindungs- und Gesichtserkennungs-Modul
- 20: Bewegungserkennungs-Modul
- 21: Datenbank
- 22: Schnittstelle
- 23: point of sale (POS)

## Patentansprüche

1. Authentifizierungs-System (14), umfassend
- ein Datenendgerät (1) mit einer Datenendeinrichtung,
- ein Kommunikationsnetzwerk (15)
- einen Authentifizierungsdienst (16), wobei der Authentifizierungsdienst (16) eine Datenbank (21) umfasst, in welcher Benutzer-Referenzdaten hinterlegt sind, und
- ein Point of sale (23);
- wobei die Datenendeinrichtung eine Bildaufnahme-Vorrichtung (3), ein Bildaufbereitungs-Modul (4) und eine drahtlose Kommunikationsschnittstelle (5) aufweist,
- wobei über das Kommunikationsnetzwerk (15), zwischen der Datenendeinrichtung und dem Authentifizierungsdienst (16), eine erste Kommunikationsverbindung (17) besteht ; wobei
- das Datenendgerät (1) durch eine Uhr gebildet ist,
- wobei das Datenendgerät (1) in einem eigenständigen Gehäuse (2) angeordnet ist,
- wobei der Authentifizierungsdienst (16) ein Gesichtsfindungs- und Gesichtserkennungs-Modul (19) und ferner ein 2D/3D-Bild-Analysemodul (18) aufweist, welches 2D/3D-Bild-Analysemodul (18) dazu ausgebildet ist, in einem, von der Bildaufnahme-Vorrichtung (3) erfassten und über die erste Kommunikationsverbindung (17) übertragenen Abbild, eine reale Person als ein 3D-Objekt zu erkennen, durch Vergleich eines Ergebnisses der Abbildanalyse des von der Bildaufnahme-Vorrichtung (3) erfassten und über die erste Kommunikationsverbindung (17) übertragenen Abbildes mit den in der Datenbank (21) gespeicherten Benutzer-Referenzdaten;
- wobei die drahtlose Kommunikationsschnittstelle (5) als Fernbereichsschnittstelle und als Nahbereichsschnittstelle ausgebildet ist,
- wobei die Nahbereichsschnittstelle der drahtlosen Kommunikationsschnittstelle (5) unidirektional ausgebildet ist,
- wobei an der Point of sale (23) eine Authentifizierungsanforderung durch das Datenendeinrichtung ausgelöst wird, und mittels der als Nahbereichsschnittstelle ausgebildeten drahtlosen Kommunikationsschnittstelle (5) eine kurzreichweitige Datenverbindung mit einer entsprechenden Gegenstelle des Point of sale (23) hergestellt wird wobei die drahtlose Kommunikationsschnittstelle (5) des Datenendgeräts (1) so konfiguriert ist, dass sie eine eindeutige Kennung von der Point of sale (23) über die kurzreichweitige Datenverbindung erfasst und so konfiguriert ist, dass sie die eindeutige Kennung über die erste Kommunikationsverbindung (17) des Kommunikationsnetwerkes (15) an den Authentifizierungsdienst (16) überträgt;
- wobei der Authentifizierungsdienst (16) weiters eine Schnittstelle (22) umfasst, und dass über das Kommunikationsnetzwerk (15) zwischen dem Point of sale (23) und der Schnittstelle (22) des Authentifizierungsdienstes (16) eine weitere Kommunikationsverbindung besteht; und,
wobei das Gesichtsfindungs- und Gesichtserkennungsmodul so konfiguriert ist, dass im Fall einer Übereinstimmung zwischen dem Ergebnis der Abbildanalyse und den Benutzer-Referenzdate, es die eindeutige Kennung als Authentifizierungssignal über die weitere Kommunikationsverbindung des Kommunikationsnetzes (15) an die Point of sale (23) überträgt.

2. Authentifizierungs-System nach Anspruch 1, **dadurch gekennzeichnet, dass** die Uhr ausgebildet ist als Armbanduhr, oder Taschenuhr, oder Ansteckuhr.

3. Authentifizierungs-System nach einem der Ansprüche 1 oder 2, **dadurch gekennzeichnet, dass** die Bildaufnahme-Vorrichtung (3) durch einen flächigen Bildsensor gebildet ist.

4. Authentifizierungs-System nach einem der Ansprüche 1 bis 3, **dadurch gekennzeichnet, dass** die Kommunikationsschnittstelle (5) als Mobilfunkschnittstelle nach einem Internationalen Mobilfunkstandard ausgebildet ist.

5. Authentifizierungs-System nach einem der Ansprüche 1 bis 4, **dadurch gekennzeichnet, dass** die Datenendeinrichtung eine Datenschnittstelle (9) aufweist.

6. Authentifizierungs-System nach einem der Ansprüche 1 bis 5, **dadurch gekennzeichnet, dass** die Datenendeinrichtung ferner eine Schnittstelle für ein Body-Area-Network aufweist.

7. Authentifizierungs-System nach einem der Ansprüche 1 bis 6, **dadurch gekennzeichnet, dass** der Authentifizierungsdienst (16) ein Bewegungserkennungs-Modul (20) aufweist.

8. Authentifizierungs-System nach Anspruch 1, **dadurch gekennzeichnet, dass** die Datenendeinrichtung ein Ausgabemittel (10) aufweist, welches am Datenendgerät (1) angeordnet ist, bevorzugt in einer Vorderseite (11) des Gehäuses. (2)

9. Authentifizierungs-System nach Anspruch 1, **dadurch gekennzeichnet, dass** in einer Rückwand des Gehäuses (2) eine biometrische Erfassungsvorrichtung angeordnet ist, welche mit der Datenendeinrichtung verbunden ist.

10. Authentifizierungs-System nach Anspruchl oder 9, **dadurch gekennzeichnet, dass** das Gehäuse (2) eine Haltevorrichtung aufweist oder das am Gehäuse (2) eine Haltvorrichtung (6) angeordnet ist, wobei die Haltevorrichtung zur Anordnung des Gehäuses (2) an einer Person ausgebildet ist.

11. Authentifizierungs-System nach Anspruch 10, **dadurch gekennzeichnet, dass** die Haltevorrichtung ein Verschlusselement (7) aufweist, welches Verschlusselement (7) über eine Kontaktgabeleitung (8) mit einem Sicherheitskreis-Modul der Datenendeinrichtung verbunden ist.

## Claims

1. An authentication system (14), comprising
- a data terminal (1) with a data terminal device,
- a communication network (15)
- an authentication service (16), wherein the authentication service (16) comprises a database (21), in which user reference data is stored, and
- a point of sale (23);
- wherein the data terminal device comprises an image capturing device (3), an image editing module (4) and a wireless communication interface (5),
- wherein, via the communication network (15), a first communication connection (17) is established between the data terminal device and the authentication service (16);
wherein
- the data terminal (1) is formed by a watch,
- wherein the data terminal (1) is arranged in an independent housing (2),
- wherein the authentication service (16) has a face detection and face recognition module (19) and, moreover, a 2D/3D image analysis module (18), which 2D/3D image analysis module (18) is configured for recognizing a real person as a 3D object in a picture captured by the image capturing device (3) and transmitted via the first communication connection (17), by comparing a result of the picture analysis of the picture captured by the image capturing device (3) and transmitted via the first communication connection (17) to the user reference data stored in the database (21);
- wherein the wireless communication interface (5) is configured as a far range interface and as a close range interface,
- wherein the close range interface of the wireless communication interface (5) is configured to be unidirectional,
- wherein, at the point of sale (23), an authentication prompt is triggered by the data terminal device, and, by means of the wireless communication interface (5) configured as a close range interface, a short-range data connection is established with a corresponding remote station of the point of sale (23), wherein the wireless communication interface (5) of the data terminal (1) is configured such that it detects an unambiguous identifier from the point of sale (23) via the short-range data connection, and is configured such that it transmits said univocal identifier to the authentication service (16) via the first communication connection (17) of the communication network (15);
- wherein the authentication service (16) further comprises an interface (22), and that an additional communication connection is established, via the communication network (15), between the point of sale (23) and the interface (22) of the authentication service (16),; and
wherein the face detection and face recognition module is configured such that in case of an accordance between the result of the image analysis and the user reference data, it transmits the univocal identifier, as an authentication signal, to the point of sale (23) via the additional communication connection of the communication network (15).

2. The authentication system according to claim 1, **characterized in that** the watch is designed as a wristwatch, or pocket watch, or pin-on watch.

3. The authentication system according to one of claims 1 or 2, **characterized in that** the image capturing device (3) is formed by a flat image sensor.

4. The authentication system according to one of claims 1 to 3, **characterized in that** the communication interface (5) is designed as a mobile communications interface according to an international mobile communications standard.

5. The authentication system according to one of claims 1 to 4, **characterized in that** the data terminal device comprises a data interface (9).

6. The authentication system according to one of claims 1 to 5, **characterized in that** the data terminal device also comprises an interface for a body area network.

7. The authentication system according to one of claims 1 to 6, **characterized in that** the authentication service (16) comprises a motion detection module (20).

8. The authentication system according to claim 1, **characterized in that** the data terminal device comprises an output means (10) which is arranged on the data terminal (1), preferably in a front side (11) of the housing. (2)

9. The authentication system according to claim 1, **characterized in that**, in a rear wall of the housing (2), a biometric detection device, which is connected to the data terminal device, is arranged.

10. The authentication system according to claim 1 or 9, **characterized in that** the housing (2) comprises a holding device, or that a holding device (6) is arranged on the housing (2), wherein the holding device is designed for arranging the housing (2) on a person.

11. The authentication system according to claim 10, **characterized in that** the holding device comprises a closing element (7), which closing element (7) is connected, via a contact mode line (8), to a safety circuit module of the data terminal device.

## Revendications

1. Système d'authentification (14) comprenant
- un terminal de données (1) avec un dispositif terminal de données,
- un réseau de communication (15),
- un service d'authentification (16), le service d'authentification (16) comprenant une base de données (21) dans laquelle sont enregistrées des données de référence d'utilisateurs et
- un point de vente (23) ;
- dans lequel le dispositif terminal de données comprend un dispositif de prise de vues (3), un module de traitement d'images (4) et une interface de communication sans fil (5),
- dans lequel, par l'intermédiaire du réseau de communication (15), entre le dispositif terminal de données et le service d'authentification (16), il existe une première liaison de communication (17) ;
dans lequel
- le terminal de données (1) est constitué d'une montre,
- dans lequel le terminal de données (1) est disposé dans un boîtier autonome (2),
- dans lequel le service d'authentification (16) comprend un module de recherche de visages et de reconnaissance de visages (19) et en outre un module d'analyse d'images 2D/3D (18), ce module d'analyse d'images 2D/3D (18) étant conçu pour reconnaître, dans une image prise par le dispositif de prise de vues (3) et transmise par l'intermédiaire de la première liaison de communication (17), une personne réelle en tant qu'objet 3D, par la comparaison d'un résultat de l'analyse de l'image prise par le dispositif de prise de vues (3) et transmise par l'intermédiaire de la première liaison de communication (17) avec les données de référence d'utilisateurs enregistrées dans la base de données (21)
- dans lequel l'interface de communication sans fil (5) est conçue comme une interface à longue portée et comme une interface à courte portée
- dans lequel l'interface à courte portée de l'interface de communication sans fil (5) est conçue de manière unidirectionnelle,
- dans lequel, au niveau du point de vente (23), une demande d'authentification est déclenchée par le dispositif terminal de données et, au moyen de l'interface de communication sans fil (5) conçue comme une interface à courte portée, une liaison de données à courte portée est établie avec un poste correspondant au point de vente (23), l'interface de communication sans fil (5) du terminal de données (1) étant configurée de façon à ce qu'une identification nettesoit détectée par le point de vente (23) par l'intermédiaire de la liaison de données à courte portée et configurée de façon à ce qu'elle transmette l'identification nette au service d'authentification (16) par l'intermédiaire de la première liaison de communication (17) du réseau de communication (15) ;
dans lequel le service d'authentification (16) comprend en outre une interface (22) et en ce que, par l'intermédiaire du réseau de communication (15), une liaison de communication supplémentaire existe entre le point de vente (23) et l'interface (22) du service d'authentification (16) ; et dans lequel le module de recherche et de reconnaissance de visages est configuré de façon à ce que, dans le cas d'une correspondance entre le résultat de l'analyse d'image et les données de référence d'utilisateurs, il transmette l'identification nette sous la forme d'un signal d'authentification par l'intermédiaire de la liaison de communication supplémentaire du réseau de communication (15) au point de vente (23).

2. Système d'authentification selon la revendication 1, **caractérisé en ce que** la montre est conçue comme une montre-bracelet, une montre à gousset ou une montre-broche.

3. Système d'authentification selon l'une des revendications 1 ou 2, **caractérisé en ce que** le dispositif de prise de vues (3) est constitué d'un capteur d'image plat.

4. Système d'authentification selon l'une des revendications 1 à 3, **caractérisé en ce que** l'interface de communication (5) est conçue comme une interface de téléphonie mobile selon un standard de téléphonie mobile international.

5. Système d'authentification selon l'une des revendications 1 à 4, **caractérisé en ce que** le dispositif terminal de données comprend une interface de données (9).

6. Système d'authentification selon l'une des revendications 1 à 5, **caractérisé en ce que** le dispositif terminal de données comprend en outre une interface pour un Body-Area-Network.

7. Système d'authentification selon l'une des revendications 1 à 6, **caractérisé en ce que** le service d'authentification (16) comprend un module de détection de mouvement (20).

8. Système d'authentification selon la revendication 1, **caractérisé en ce que** le dispositif terminal de données comprend un moyen de sortie (10) qui est disposé sur le terminal de données (1), de préférence sur un côté avant (11) du boîtier (2).

9. Système d'authentification selon la revendication 1, **caractérisé en ce que**, dans une paroi arrière du boîtier (2), est disposé un dispositif de détection biométrique qui est relié avec le dispositif terminal de données.

10. Système d'authentification selon la revendication 1 ou 9, **caractérisé en ce que** le boîtier (2) comprend un dispositif de maintien ou **en ce que**, sur le boîtier (2), est disposé un dispositif de maintien (6), le dispositif de maintien étant conçu pour disposer le boîtier (2) sur une personne.

11. Système d'authentification selon la revendication 10, **caractérisé en ce que** le dispositif de maintien comprend un élément de fermeture (7), cet élément de fermeture (7) étant relié par l'intermédiaire d'une ligne de contact (8) avec un module à circuit de sécurité du dispositif terminal de données.
